# EUROPÄISCHE PATENTSCHRIFT

(11) **EP 2 025 896 B1**
(45) Veröffentlichungstag und Bekanntmachung des Hinweises auf die Patenterteilung: **18.05.2011**
(21) Anmeldenummer: 08160850.7
(22) Anmeldetag: 22.07.2008
(51) Int. Cl.: F02C 6/12, F04D 27/02, F04D 29/42

(54) **Radialverdichter für einen Turbolader**
Centrifugal compressor for a turbocharger
Compresseur radial pour turbocompresseur

(30) Priorität: 30.07.2007 DE 102007035966
(43) Veröffentlichungstag der Anmeldung: 18.02.2009
(73) Patentinhaber: Bosch Mahle Turbo Systems GmbH & Co. KG, 70376 Stuttgart (DE)
(72) Erfinder: Hale, Thomas, Northampton, Northamptonshire NN13RR (GB)
(74) Vertreter: BRP Renaud & Partner

(56) Entgegenhaltungen:
- DE-A1- 1 912 623
- DE-C1- 19 823 274
- GB-A- 2 319 304
- SU-A2- 478 957
- US-B1- 6 648 594

## Beschreibung

Die vorliegende Erfindung betrifft einen Radialverdichter für einen Turbolader, insbesondere für eine Brennkraftmaschine, mit den Merkmalen des Oberbegriffs des Anspruchs 1. Die Erfindung betrifft außerdem einen mit einem derartigen Radialverdichter ausgestatteten Turbolader sowie ein Betriebsverfahren für einen derartige Radialverdichter bzw. Turbolader.

Turbolader, insbesondere Abgasturbolader, kommen beispielsweise bei Brennkraftmaschinen zur Anwendung, um das Druckniveau im Frischgas beim Ladungswechselvorgang zu erhöhen. Ein derartiger Turbolader kann mit einem Radialverdichter ausgestattet sein, der ein Verdichterrad umfasst, um das jeweilige Gas zu fördern und zu komprimieren. Hierzu weist das Verdichterrad eine axiale Eingangsseite und eine radiale Ausgangsseite auf und ist in einem Verdichterradraum angeordnet. Ein Einlasskanal führt zur Eingangsseite des Verdichterrads und bei einer Brennkraftmaschine zu einem Niederdruckbereich einer mit dem Turbolader ausgestatteten Frischgasanlage. Ein Auslasskanal führt von der Ausgangsseite des Verdichterrads weg zur Hochdruckseite der Frischgasanlage.

Bei Brennkraftmaschinen, die in Kraftfahrzeugen angeordnet sind, variiert der Massenstrom an der Brennkraftmaschine zuzuführendem Frischgas in einem relativ großen Bereich. Beispielsweise treten bei Teillast oder beim Leerlaufbetrieb der Brennkraftmaschine sehr kleine Massenströme auf, während bei Volllast entsprechend große Massenströme auftreten. Eine Leistungssteigerung der Brennkraftmaschine durch die Aufladung des Frischgases ist jedoch nicht nur bei großen Lasten, sondern auch bei Teillast erwünscht. Bei kleinen Massenströmen kann das für Volllast konzipierte Verdichterrad eine Pumpgrenze erreichen, die zu instationären Strömungsvorgängen führt und insbesondere einen Druckaufbau durch das Verdichterrad behindert.

Um auch bei kleineren Massenströmen einen hinreichenden Abstand zur Pumpgrenze erreichen zu können, also um auch bei kleineren Massenströmen eine gewisse Aufladung erzielen zu können, ist es grundsätzlich möglich, einen Rezirkulationspfad vorzusehen, der einenends mit dem Einlasskanal stromauf der Eingangsseite des Verdichterrads und der anderenends mit dem Verdichterradraum zwischen der Eingangsseite und der Ausgangsseite des Verdichterrads kommunizierend verbunden ist. Mit Hilfe eines derartigen Rezirkulationspfads kann teilverdichtetes Gas zur Niederdruckseite, also in den Einlasskanal zurückströmen, wodurch der Massenstrom an der Einlassseite des Verdichterrads künstlich erhöht wird. Durch den erhöhten Massenstrom an der Eingangsseite kann der gewünschte Abstand zur Pumpgrenze erreicht werden, auch wenn der Massenstrom an der Ausgangsseite kleiner ist als an der Eingangsseite.

Es hat sich jedoch gezeigt, dass ein derartiger Rezirkulationspfad bei größeren Massenströmen nachteilig sein kann und insbesondere den Wirkungsgrad des Verdichters reduziert. Ein reduzierter Wirkungsgrad im Verdichter kann zu einer unerwünschten Temperaturerhöhung führen.

Ein Turbolader mit einem Radialverdichter gemäß dem Oberbegriff des Anspruchs 1 ist aus der US 6,648,594 B1 bekannt. Beim bekannten Radialverdichter sind zumindest zwei axial voneinander beabstandete Verbindungsöffnungen durch eine Begrenzungswand hindurchgeführt, die den Verdichterradraum radial begrenzt. Die beiden Verbindungsöffnungen führen durch die Begrenzungswand hindurch zu einem Ringraum, der in den Einlasskanal mündet. Die beiden Verbindungsöffnungen bilden zusammen mit dem Ringraum unterschiedlich lange Rezirkulationspfade. Beim bekannten Radialverdichter ist außerdem im Ringraum eine Steuerhülse angeordnet, die für jede Verbindungsöffnung eine Steueröffnung enthält und die im Ringraum axial verstellbar ist. Sie kann dementsprechend zwischen einer Offenstellung und einer Schließstellung axial verstellt werden, um die beiden Verbindungsöffnungen wahlweise zu öffnen oder zu sperren.

Aus der GB 2 319 304 ist es bei einem anderen Turbolader bekannt, den Rezirkulationspfad des Radialverdichters mit einer radialen Vertiefung auszustatten, die in einem Gehäuse ausgebildet ist, das den Einlasskanal und den Verdichterradraum enthält.

Weitere Radialverdichter mit Rezirkulationspfad sind beispielsweise aus der DE 198 23 274 C1 und aus der SU 478 957 A2 bekannt.

Die vorliegende Erfindung beschäftigt sich mit dem Problem, für einen Verdichter bzw. für einen Turbolader bzw. für ein zugehöriges Betriebsverfahren eine verbesserte Ausführungsform anzugeben, die sich insbesondere dadurch auszeichnet, dass der Verdichter bzw. der Turbolader einen erhöhten Wirkungsgrad besitzt.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, den Rezirkulationspfad steuerbar auszugestalten, derart, dass er zumindest geöffnet und gesperrt werden kann. Die hierdurch erzielbaren Vorteile liegen auf der Hand. Bei kleineren Lasten einer mit dem Verdichter ausgestatteten Brennkraftmaschine bzw. bei kleineren Massenströmen wird der Rezirkulationspfad geöffnet, wodurch über die rezirkulierte Gasmenge an der Einlassseite des Verdichterrads eine Vergrößerung des Massenstroms erreicht wird, wodurch der Verdichter in bekannter Weise stabiler arbeitet. Bei größeren Lasten bzw. Massenströmen kann dann der Rezirkulationspfad geschlossen werden. In der Folge kann der gesamte an der Eingangsseite eintretende Massenstrom komprimiert an der Ausgangsseite ausgestoßen werden. Hierdurch wird die Leistungsfähigkeit und insbesondere der Wirkungsgrad des Verdichters und somit eines damit ausgestatteten Turboladers verbessert.

Erfindungsgemäß weist der wenigstens eine Rezirkulationspfad eine radiale Vertiefung auf, die in ein den Einlasskanal und den Verdichterradraum enthaltendes Gehäuse eingebracht ist. Ferner ist eine stationär am Gehäuse angeordnete Kanalhülse vorgesehen, die im Bereich der Steuerhülse den Einlasskanal und zumindest teilweise den Verdichterradraum radial aussen begrenzt und dabei die jeweilige Vertiefung axial überlappt und radial innen begrenzt. Die Steuerhülse ist nun koaxial zur Kanalhülse angeordnet und ist radial außen an der Kanalhülse axial verstellbar gelagert. Ferner weist die Kanalhülse zumindest einen radialen Durchbruch auf, durch den der jeweilige Rezirkulationspfad mit dem Einlasskanal kommuniziert. Ein dem Verdichterrad zugewandter Abschnitt der Steuerhülse erstreckt sich entlang und/oder innerhalb der jeweiligen Vertiefung.

Dabei ist es möglich, den Rezirkulationspfad ausschließlich zwischen zwei Zuständen, nämlich dem Schließzustand und dem Öffnungszustand zu verstellen. Eine derartige Ausführungsform ist vergleichsweise preiswert realisierbar. Ebenso ist es grundsätzlich möglich, bei einer anderen Ausführungsform am Rezirkulationspfad außerdem zumindest einen Zwischenzustand einstellen zu können, bei dem der Rezirkulationspfad an sich geöffnet ist, jedoch einen gegenüber dem Offenzustand reduzierten durchströmbaren Querschnitt aufweist. Durch diese Bauform kann die Rezirkulationsrate gestuft oder stufenlos an den Massenstrom adaptiert werden.

Entsprechend einer besonders vorteilhaften Ausführungsform kann außerdem vorgesehen sein, dass bei maximalen Massenströmen der Rezirkulationspfad wieder geöffnet wird. Bei sehr großen Massenströmen, die beispielsweise bei Volllast und hoher Drehzahl der Brennkraftmaschine auftreten können, kann das im Bereich der Eingangsseite strömende Gas Schallgeschwindigkeit erreichen, wodurch der Massenstrom begrenzt ist. Durch das Öffnen des Rezirkulationspfads wird bei diesem Betriebszustand erreicht, dass eine zusätzliche Gasmenge vom Einlasskanal durch den Rezirkulationspfad in den Verdichterradraum gelangt. Bei diesem Betriebszustand erfolgt somit keine Rezirkulation, sondern vielmehr eine Vergrößerung des eingangsseitig zur Verfügung stehenden durchströmbaren Querschnitts, wodurch sich der mit dem Verdichter komprimierbare Massenstrom insgesamt erhöhen lässt.

Weitere wichtige Merkmale und Vorteile der Erfindung ergeben sich aus den Unteransprüchen, aus den Zeichnungen und aus der zugehörigen Figurenbeschreibung anhand der Zeichnungen. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen Axialschnitt durch einen Verdichter bei ei- ner gattungsgemäßen Ausführungsform und bei geöff- netem Rezirkulationspfad,
- Fig. 2: eine Ansicht wie in Fig. 1, jedoch bei geschlosse- nem Rezirkulationspfad,
- Fig. 3: eine Ansicht wie in Fig. 1, jedoch bei einer er- findungsgemäßen Ausführungsform,
- Fig. 4: eine Ansicht wie in Fig. 3, jedoch bei geschlosse- nem Rezirkulationspfad.

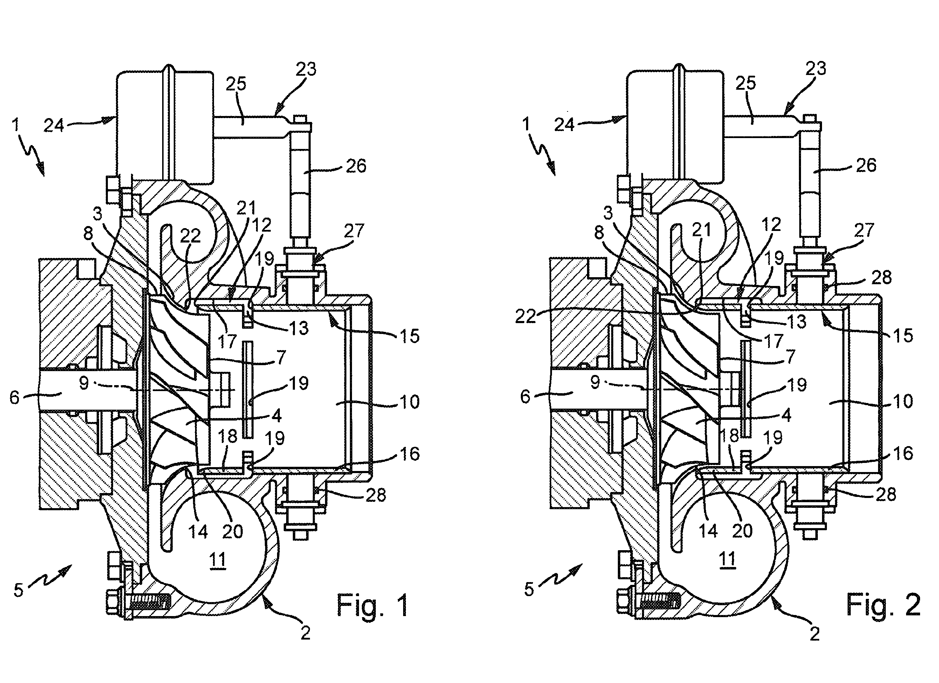

Entsprechend den Fig. 1 bis 4 umfasst ein Verdichter 1 in einem Verdichtergehäuse 2 einen Verdichterradraum 3, in dem ein Verdichterrad 4 angeordnet ist. Der Verdichter 1 bildet einen Bestandteil einer im übrigen nicht gezeigten Ladeeinrichtung, bei der es sich insbesondere um einen Turbolader 5 handeln kann, der nur teilweise dargestellt ist, nämlich im Umfang seines Verdichters 1. Eine Turbine des Turboladers 5 ist hier nicht dargestellt, treibt jedoch eine Antriebswelle 6 an, die drehfest mit dem Verdichterrad 4 verbunden ist. Insbesondere handelt es sich beim Turbolader 5 um einen Abgasturbolader. Bevorzugt kommt der Verdichter 1 bzw. der Turbolader 5 bei einer Brennkraftmaschine, die insbesondere in einem Fahrzeug angeordnet sein kann, zur Aufladung von Frischgas zur Anwendung.

Das Verdichterrad 4 dient zum Fördern und Komprimieren eines Gases, insbesondere von Frischgas einer Brennkraftmaschine.

Der Verdichter 1 ist als Radialverdichter ausgestaltet. Dementsprechend weist das Verdichterrad 4 eine axiale Eingangsseite 7 und eine radiale Ausgangsseite 8 auf. Die Richtungsangaben "axial" und "radial" beziehen sich auf die Orientierung einer Rotationsachse 9 des Verdichterrads 4 bzw. der Antriebswelle 6.

Im Verdichtergehäuse 2 ist ein Einlasskanal 10 ausgebildet, der zur Eingangsseite 7 führt. Ferner enthält das Verdichtergehäuse 2 einen Auslasskanal 11, der von der Ausgangsseite 8 wegführt und der in üblicher Weise schneckenförmig ausgestaltet sein kann und insbesondere einen sich in Strömungsrichtung aufweitenden Querschnitt besitzen kann.

Der Radialverdichter 1 weist zumindest einen Rezirkulationspfad 12 auf, der sich dadurch charakterisiert, dass er an einem ersten Ende 13 mit dem Einlasskanal 10 kommuniziert und mit einem zweiten Ende 14 mit dem Verdichterradraum 3 kommuniziert. Dementsprechend befindet sich das erste Pfadende 13 im Einlasskanal 10 stromauf der Eingangsseite 7, während sich das zweite Pfadende 14 im Verdichterradraum 3 stromab der Eingangsseite 7 und stromauf der Ausgangsseite 8 befindet.

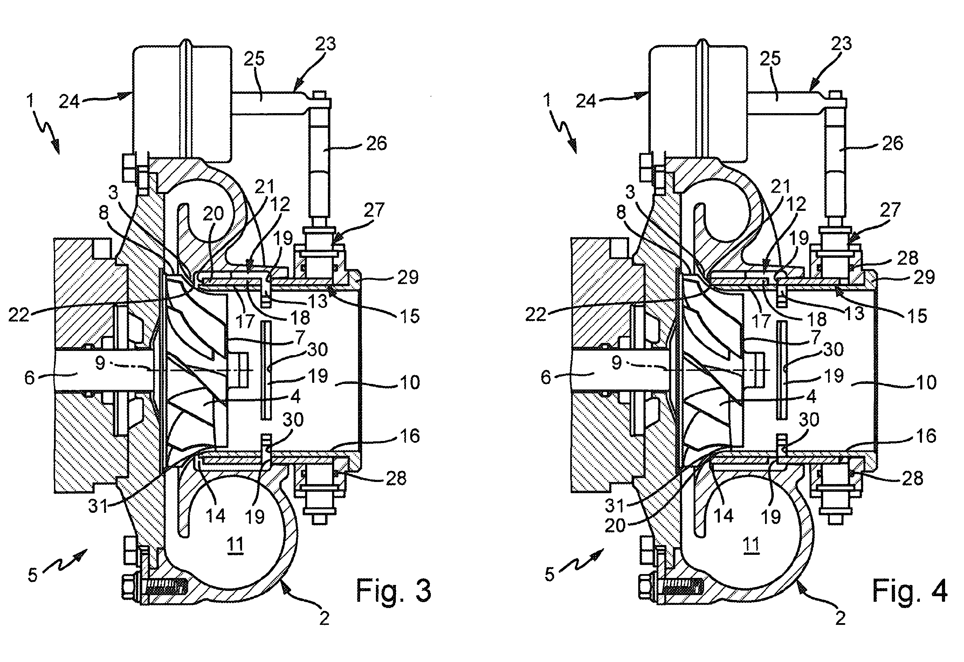

Zum Steuern des wenigstens einen Rezirkulationspfads 12 ist eine Steuervorrichtung 15 vorgesehen. Diese ist so ausgestaltet, dass damit ein durchströmbarer Querschnitt des wenigstens einen Rezirkulationspfads 12 verändert werden kann, und zwar zumindest zum Öffnen und zum Schließen. Dementsprechend kann mit Hilfe der Steuervorrichtung 15 der jeweilige Rezirkulationspfad 12 zumindest zwischen dem in den Fig. 1 und 3 gezeigten Öffnungszustand und dem in den Fig. 2 und 4 gezeigten Schließzustand verstellt werden. Es ist klar, dass bei einer entsprechenden Ausgestaltung der Steuervorrichtung 15 grundsätzlich auch zumindest eine oder beliebig viele Zwischenzustände einstellbar sind, bei denen der durchströmbare Querschnitt größer als im Schließzustand und kleiner als im Öffnungszustand ist. Bei den hier gezeigten Ausführungsformen weist die Steuervorrichtung 15 eine Steuerhülse 16 auf. Diese ist im Einlasskanal 10 zwischen einer in den Fig. 1 und 3 wiedergegebenen Offenstellung und einer in den Fig. 2 und 4 wiedergegebenen Schließstellung axial verstellbar angeordnet.

Der jeweilige Rezirkulationspfad 12 umfasst vorzugsweise eine in das Verdichtergehäuse 2 eingearbeitete radiale Vertiefung 17. Diese Vertiefung 17 kann einen in Umfangsrichtung geschlossenen Ring bilden. Ebenso ist es möglich, mehrere derartige Vertiefungen 17 in Umfangsrichtung verteilt angeordnet im Verdichtergehäuse 2 anzubringen. Die Anzahl dieser Vertiefungen 17 entspricht dann der Anzahl an Rezirkulationspfaden 12. Die jeweilige Vertiefung 17 ist somit radial außen durch das Verdichtergehäuse 2 begrenzt. Die Steuerhülse 16 ist nun so angeordnet, dass sie zumindest mit einem dem Verdichterrad 4 zugewandten axialen Abschnitt 18 die Vertiefung 17 radial innen begrenzt. Somit ist der jeweilige Rezirkulationspfad 12 innerhalb der Vertiefung 17 zwischen dem Verdichtergehäuse 2 und der Steuerhülse 16 hindurchgeführt. Die Steuerhülse 16 weist in ihrem nicht näher bezeichneten Mantel zumindest einen radialen Durchbruch 19 auf. Im gezeigten Beispiel weist die Steuerhülse 16 in ihrem Mantel vier derartige, ringsegmentartige Durchbrüche 19 auf, die in Umfangsrichtung verteilt angeordnet sind. Durch den oder die jeweiligen Durchbrüche 19 können der oder die Rezirkulationspfade 12 mit dem Einlasskanal 10 kommunizieren, zumindest in der Offenstellung der Steuerhülse 16.

Die Steuerhülse 16 ist bei den hier gezeigten Ausführungsformen außerdem an ihrer dem Verdichterrad 4 zugewandten Stirnseite mit einem Endabschnitt 20 versehen, der so positioniert und ausgestaltet ist, dass er in der Schließstellung der Steuerhülse 16 das in den Verdichterradraum 3 mündende zweite Ende 14 des jeweiligen Rezirkulationspfads 12 verschließt. Insbesondere kann dabei dieser Endabschnitt 20 radial innen eine Kontur aufweisen, die an die Kontur des Verdichtergehäuses 2 im Verdichterradraum 3 so angepasst ist, dass sich die Steuerhülse 16 formintegriert in den Verlauf der den Verdichterradraum 3 begrenzenden Wandung des Verdichtergehäuses 2 einfügt.

Bei der in den Fig. 1 und 2 gezeigten Ausführungsform bildet die Steuerhülse 16 eine den Einlasskanal 10 sowie den Verdichterradraum 3 im Bereich der jeweiligen Vertiefung 17 begrenzende Wandung. Die Steuerhülse 16 dient somit unmittelbar zur Strömungsführung im Einlaufbereich zwischen Einlasskanal 10 und Verdichterrad 4.

Bei der in Fig. 1 gezeigten Offenstellung der Verdichterhülse 16 ist diese im Verdichtergehäuse 2 axial so positioniert, dass ihr dem Verdichterrad 4 zugewandtes stirnseitiges Ende 21 von einem ebenfalls dem Verdichterrad 4 zugewandten Ende 22 der Vertiefung 17 axial beabstandet ist, wodurch der jeweilige Rezirkulationspfad 12 an seinem zweiten Ende 14 offen ist. Der jeweilige Durchbruch 19 ist dabei axial so positioniert, dass auch das erste Ende des jeweiligen Rezirkulationspfads 12 in dieser Relativlage der Steuerhülse 16 offen ist.

Bei der in Fig. 2 gezeigten Schließstellung der Steuerhülse 16 ist diese im Verdichtergehäuse 2 so positioniert, dass sie mit ihrem stirnseitigen Ende 21 am verdichterradseitigen Ende 22 der jeweiligen Vertiefung 17 anliegt. Dementsprechend ist der Rezirkulationspfad 12 im Bereich seines zweiten Endes 14 verschlossen. Bei dieser Ausführungsform bleibt der jeweilige Rezirkulationspfad 12 über den jeweiligen Durchbruch 19 mit dem Einlasskanal 10 verbunden.

Zum axialen Verstellen der Steuerhülse 16 ist ein Stellantrieb 23 vorgesehen, der beispielsweise einen Aktuator 24 aufweist. Der Aktuator 24 treibt über eine Antriebsstange 25 einen zweifach gekröpften Antriebshebel 26 an, wodurch eine Drehbewegung erzeugt wird, die über eine Mitnehmereinrichtung 27 in eine Axialbewegung der Steuerhülse 16 umgewandelt wird. Die Mitnehmereinrichtung 27 kann über entsprechende Dichtungen 28 vom Einlasskanal 10 gasdicht getrennt sein. Der Stellantrieb 23 bzw. sein Aktuator 24 kann elektrisch, pneumatisch oder hydraulisch betrieben sein. Desweiteren kann der Stellantrieb 23 auch einen vom gezeigten Aufbau abweichenden Aufbau aufweisen.

Bei der in den Fig. 3 und 4 gezeigten Ausführungsform ist zusätzlich zur axial verstellbaren Steuerhülse 15 eine stationär am Verdichtergehäuse 2 angeordnete Kanalhülse 29 vorgesehen. Diese ist so positioniert, dass sie den Einlasskanal 10 und zumindest einen Teil des Verdichterradraums 3 radial außen begrenzt. Im Verdichterradraum 3 bildet die Kanalhülse 29 einen Teil einer den Verdichterradraum 3 begrenzenden Wandung. Ferner überlappt die Kanalhülse 29 in axialer Richtung die jeweilige Vertiefung 17 und bildet zusätzlich zur Steuerhülse 15 eine weitere, radial innen liegende Begrenzung für die jeweilige Vertiefung 17. Die Kanalhülse 29 und die Steuerhülse 15 sind zueinander koaxial angeordnet, wobei die Steuerhülse 16 radial außen an der Kanalhülse 29 axial verstellbar gelagert ist.

Auch die Kanalhülse 29 weist in ihrem nicht näher bezeichneten Mantel zumindest einen radialen Durchbruch 30 auf, der im wesentlichen fluchtend zum ersten Ende 13 des jeweiligen Rezirkulationspfads 12 angeordnet ist. Im gezeigten Beispiel sind auch in der Kanalhülse 29 vier ringsegmentartige, in Umfangsrichtung verteilt angeordnete Durchbrüche 30 vorgesehen. Durch diese Durchbrüche 30 kann der jeweilige Rezirkulationspfad 12 zumindest bei in ihre Offenstellung verstellter Steuerhülse 16 mit dem Einlasskanal 10 kommunizieren. Ein dem Verdichterrad 4 zugewandtes stirnseitiges Ende 31 der Kanalhülse 29 ist so positioniert, dass es gegenüber dem verdichterradseitigen Ende 22 des jeweiligen Rezirkulationspfads 12 axial beabstandet ist, um so das zweite Ende 14 des Rezirkulationspfads 12 zu bilden. Ferner ist die Steuerhülse 16 so dimensioniert, dass sie sich in dem den Verdichterrad 4 zugewandten Abschnitt 18 innerhalb der jeweiligen Vertiefung 17 entlang der jeweiligen Vertiefung 17 axial erstreckt.

Bei dem in Fig. 3 gezeigten Zustand ist die Steuerhülse 16 in ihre Offenstellung verstellt, wodurch der Rezirkulationspfad 12 aktiviert ist. In diesem Zustand fluchten die Durchbrüche 30 der Kanalhülse 29 radial mit den Durchbrüchen 19 der Steuerhülse 16, wodurch das erste Ende 13 des jeweiligen Rezirkulationspfads 12 offen ist. Ferner ist das stirnseitige Ende 21 der Steuerhülse 16 vom zugeordneten Ende 22 der Vertiefung 19 axial beabstandet, wodurch auch das zweite Ende 14 des jeweiligen Rezirkulationspfads 12 offen ist.

Bei der in Fig. 4 gezeigten Situation ist der jeweilige Rezirkulationspfad 12 deaktiviert, d.h., die Steuerhülse 16 ist in ihre Schließstellung verstellt. In dieser Schließstellung verschließt das stirnseitige Ende 21 der Steuerhülse 16 das verdichterradseitige zweite Ende 14 des jeweiligen Rezirkulationspfads 12, indem es in den durch den Abstand zwischen dem stirnseitigen Ende 31 der Kanalhülse 29 und dem verdichterradseitigen Ende 22 der jeweiligen Vertiefung 21 gebildeten Spalt einfährt und diesen ausfüllt. Zweckmäßig ist die Kontur der Steuerhülse 16 an ihrem stirnseitigen Ende 21 an die Kontur der den Verdichterradraum 3 begrenzenden Wandung adaptiert, wodurch diese Wandung in der Schließstellung der Steuerhülse 16 einen formintegrierten Verlauf aufweist. Zusätzlich oder optional kann der jeweilige Rezirkulationspfad 12 auch dadurch deaktiviert werden, dass beim Verstellen der Steuerhülse 16 die radial fluchtende Überdeckung der korrespondierenden Durchbrüche 19 und 30 nicht mehr vorliegt, so dass die Steuerhülse 16 den jeweiligen Durchbruch 30 der Kanalhülse 29 axial überfährt und somit verschließt.

Der Radialverdichter 1 bzw. der damit ausgestattete Turbolader 5 kann beispielsweise wie folgt betrieben werden. Die Steuerhülse 16 bzw. die Steuervorrichtung 15 kann in Abhängigkeit des zu fördernden Massenstroms betätigt werden. Vorzugsweise ist dabei vorgesehen, dass die Steuereinrichtung 15 den jeweiligen Rezirkulationspfad 12 aktiviert, also öffnet, wenn ein Bereich kleiner Massenströme vorliegt. Kleine Massenströme ergeben sich beispielsweise dann, wenn eine mit dem Turbolader 5 ausgestattete Brennkraftmaschine bei Teillast betrieben wird. Beispielsweise liegt ein Bereich kleiner Massenströme vor, wenn die Drehzahl maximal 40% einer Maximaldrehzahl beträgt und wenn die Last größer als 50% einer Maximallast oder Volllast ist. Sobald ein Bereich großer Massenströme vorliegt, steuert die Steuervorrichtung 15 den jeweiligen Rezirkulationspfad 12 so an, dass dieser deaktiviert, also geschlossen wird. Ein Bereich großer Massenströme liegt beispielsweise dann vor, wenn die Brennkraftmaschine bei mittleren Lasten betrieben wird oder bei Volllast, jedoch bei niedrigen Drehzahlen betrieben wird. Beispielsweise liegt ein Bereich großer Massenströme vor, wenn die Drehzahl bei beliebiger Last zwischen 40% und 70% der Maximaldrehzahl liegt. Grundsätzlich ist auch wenigstens ein transienter Betriebszustand mit wenigstens einer Zwischenstellung für den Rezirkulationspfad 12 möglich.

Gemäß einer besonders vorteilhaften Ausführungsform kann vorgesehen sein, dass in einem Bereich maximaler Massenströme die Steuervorrichtung 15 den jeweiligen Rezirkulationspfad 12 wieder öffnet. Maximale Massenströme liegen beispielsweise bei Volllast und hohen Drehzahlen der Brennkraftmaschine vor. Beispielsweise liegt ein Bereich maximaler Massenströme vor, wenn die Drehzahl mindestens 70% der Maximaldrehzahl beträgt und wenn die Last bei mehr als 50% der Volllast liegt.

## Patentansprüche

1. Radialverdichter für einen Turbolader, insbesondere für eine Brennkraftmaschine,
- mit einem Verdichterrad (4) zum Fördern und Komprimieren von einem Gas, das eine axiale Eingangsseite (7) und eine radiale Ausgangsseite (8) aufweist,
- mit einem Verdichterradraum (3), in dem das Verdichterrad (4) angeordnet ist und der sich von der Eingangsseite (7) zur Ausgangsseite (8) erstreckt,
- mit einem zur Eingangsseite (7) des Verdichterrads (4) führenden Einlasskanal (10),
- mit wenigstens einem Rezirkulationspfad (12), der einenends in den Einlasskanal (10) und andererseits in den Verdichterradraum (3) mündet,
- wobei eine Steuervorrichtung (15) zum Verändern, nämlich zumindest zum Öffnen und Schließen, eines durchströmbaren Querschnitts des wenigstens einen Rezirkulationspfads (12) vorgesehen ist,
- wobei die Steuervorrichtung (15) eine Steuerhülse (16) aufweist, die im Einlasskanal (10) zwischen einer Offenstellung und einer Schließstellung axial verstellbar angeordnet ist,
**dadurch gekennzeichnet,**
- **dass** der wenigstens eine Rezirkulationspfad (12) eine radiale Vertiefung (17) aufweist, die in ein den Einlasskanal (10) und den Verdichterradraum (3) enthaltendes Gehäuse (2) eingebracht ist,
- **dass** eine stationär am Gehäuse (2) angeordnete Kanalhülse (29) vorgesehen ist, die im Bereich der Steuerhülse (16) den Einlasskanal (10) und zumindest teilweise den Verdichterradraum (3) radial außen begrenzt und dabei die jeweilige Vertiefung (17) axial überlappt und radial innen begrenzt,
- **dass** die Steuerhülse (16) koaxial zur Kanalhülse (29) angeordnet ist und radial außen an der Kanalhülse (29) axial verstellbar gelagert ist,
- **dass** die Kanalhülse (29) zumindest einen radialen Durchbruch (30) aufweist, durch den der jeweilige Rezirkulationspfad (12) mit dem Einlasskanal (10) kommuniziert,
- **dass** sich ein dem Verdichterrad (4) zugewandter Abschnitt (18) der Steuerhülse (16) entlang und/oder innerhalb der jeweiligen Vertiefung (17) erstreckt.

2. Radialverdichter nach Anspruch 1,
**dadurch gekennzeichnet,**
**dass** die Steuerhülse (16) wenigstens einen radialen Durchbruch (19) aufweist, durch den der wenigstens eine Rezirkulationspfad (12) mit dem Einlasskanal (10) kommuniziert.

3. Radialverdichter nach Anspruch 1 oder 2,
**dadurch gekennzeichnet,**
**dass** die Steuerhülse (16) einen dem Verdichterrad (4) zugewandten stirnseitigen Endabschnitt (18) aufweist, der in der Schließstellung ein in den Verdichterradraum (3) mündendes Ende (14) des wenigstens einen Rezirkulationspfads (12) verschließt.

4. Radialverdichter nach einem der Ansprüche 1 bis 3, **dadurch gekennzeichnet,**
**dass** die Steuerhülse (16) in ihrer Schließstellung mit ihrem dem Verdichterrad (4) zugewandten stirnseitigen Ende (21) eine in den Verdichterradraum (3) mündende Öffnung (14) des jeweiligen Rezirkulationspfads (12) verschließt, die durch einen Abstand zwischen entsprechenden Enden (31,22) der jeweiligen Vertiefung (17) und der Kanalhülse (29) gebildet ist.

5. Radialverdichter nach einem der Ansprüche 1 bis 4, **dadurch gekennzeichnet,**
**dass** die Steuerhülse (16) in ihrer Offenstellung mit ihrem wenigstens einen Durchbruch (19) zum wenigstens einen Durchbruch (30) der Kanalhülse (29) radial fluchtend angeordnet ist.

6. Radialverdichter nach einem der Ansprüche 1 bis 5, **dadurch gekennzeichnet,**
**dass** die Steuerhülse (16) in ihrer Schließstellung den wenigstens einen Durchbruch (30) der Kanalhülse (29) verschließt.

7. Turbolader, insbesondere Abgasturbolader, mit einem Radialverdichter (1) nach einem der Ansprüche 1 bis 6.

8. Verfahren zum Betreiben eines Radialverdichters (1)nach einem der Ansprüche 1 bis 6 oder eines Turboladers (5) nach Anspruch 7, insbesondere für eine Brennkraftmaschine,
- bei dem ein Verdichterrad (4) in einem Verdichterradraum (3) Gas von einer mit einem Einlasskanal (10) kommunizierenden Eingangsseite (7) zu einer Ausgangsseite (8) fördert,
- bei dem zumindest ein steuerbarer Rezirkulationspfad (12) vorgesehen ist, der einenends mit dem Einlasskanal (10) stromauf der Eingangsseite (7) und anderenends mit dem Verdichterradraum (3) stromab der Eingangsseite (7) und stromauf der Ausgangsseite (8) kommunizierend verbunden ist,
- bei dem in einem Bereich kleiner Gasmassenströme der wenigstens eine Rezirkulationspfad (12) geöffnet wird,
- bei dem in einem Bereich großer Gasmassenströme der wenigstens eine Rezirkulationspfad (12) geschlossen wird.

9. Verfahren nach Anspruch 8,
**dadurch gekennzeichnet,**
**dass** in einem Bereich maximaler Gasmassenströme der wenigstens eine Rezirkulationspfad (12) geöffnet wird.

## Claims

1. A radial compressor for a turbocharger, in particular for an internal combustion engine,
- with a compressor wheel (4) for conveying and compressing a gas, having an axial intake end (7) and a radial exhaust end (8),
- with a compressor wheel space (3) in which the compressor wheel (4) is arranged and which extends from the intake end (7) to the exhaust end (8),
- with an inlet port (10) leading to the intake end (7) of the compressor wheel (4),
- with at least one recirculation path (12) which opens at one end into the inlet port (10) and at the other end into the compressor wheel space (3),
- wherein a control device (15) is provided for modifying a flow-through cross section, namely at least opening and closing the flow-through cross section, of the at least one recirculation path (12),
- wherein the control device (15) has a control liner (16), which is arranged in the inlet port (10), so it is axially adjustable between an open position and a closed position, **characterized in**
- **that** the at least one recirculation path (12) has a radial recess (17), which is introduced into a housing (2) containing the inlet port (10) and the compressor wheel space (3),
- **that** a port liner (29) is provided in a stationary position on the housing (2) and borders the inlet port (10) in the area of the control liner (16) and at least partially borders the compressor wheel space (3) on the outside radially, thereby overlapping with the respective recess (17) axially and bordering it on the inside radially,
- **that** the control liner (16) is arranged coaxially with the port liner (29) and is supported on the outside radially on the port liner (29), so that it is axially adjustable,
- **that** the port liner (29) has at least one radial passage (30) through which the respective recirculation path (12) communicates with the inlet port (10),
- **that** a section (18) of the control liner (16) facing the compressor wheel (4) extends along and/or inside the respective recess (17).

2. The radial compressor according to Claim 1, **characterized in that**
the control liner (16) has at least one radial passage (19) through which the at least one recirculation path (12) communicates with the inlet port (10).

3. The radial compressor according to Claim 1 or 2, **characterized in that**
the control liner (16) has an end section (18) facing the compressor wheel (4), said end section closing an end (14)
of the at least one recirculation path (12) opening into the compressor wheel space (3) in the closed position.

4. The radial compressor according to anyone of claims 1 to 3,
**characterized in that**
in its closed position, the control liner (16) with its face end (21) facing the compressor wheel (4) closes an opening (14) in the respective recirculation path (12) that opens into the compressor wheel space (3), said opening being formed by a distance between the corresponding ends (31, 22) of the respective recess (17) and the port liner (29).

5. The radial compressor according to anyone of claims 1 to 4,
**characterized in that**
in its open position, the control liner (16) with its at least one passage (19) is arranged so it is radially aligned with at least one passage (30) in the port liner (29).

6. The radial compressor according to anyone of claims 1 to 5,
**characterized in that**
the control liner (16) in its closed position closes the at least one passage (30) in the port liner (29).

7. The turbocharger, in particular the exhaust gas turbocharger, having a radial compressor (1) according to any one of Claims 1 through 6.

8. The method for operating a radial compressor (1) according to any one of claims 1 to 6 or operating a turbocharger (5) according to claim 7, in particular for an internal combustion engine,
- in which a compressor wheel (4) conveys gas in a compressor wheel space (3) from an intake end (7) communicating with an inlet port (10) to an exhaust end (8),
- in which at least one controllable recirculation path (12) which is connected at one end to the inlet port (10) upstream from the intake end (7) and is connected at the other end to the compressor wheel space (3) downstream from the intake end (7) and upstream from the exhaust end (8) so they communicate,
- in which the at least one recirculation path (12) is opened in a low range of gas mass flow rate,
- in which in a high mass flow rate range the at least one recirculation path (12) is closed.

9. The method according to Claim 8,
**characterized in that**
a recirculation path (12) is opened in a range of maximum gas mass flow rates of the at least one recirculation path.

## Revendications

1. Compresseur radial pour un turbocompresseur, en particulier pour un moteur à combustion interne, comprenant
- une roue de compresseur (4) pour le transport et la compression d'un gaz, qui présente un côté d'entrée axial (7) et un côté de sortie (8) radial,
- un espace de roue de compresseur (3), dans lequel la roue de compresseur (4) est disposée et qui s'étend du côté d'entrée (7) vers le côté de sortie (8),
- un canal d'admission (10) conduisant au côté d'entrée (7) de la roue de compresseur (4)
- au moins un chemin de recirculation (12), qui débouche d'une part dans le canal d'admission (10) et d'autre part dans l'espace de la roue de compresseur (3),
- une dispositif de commande (15) étant prévu pour la variation, à savoir au moins pour l'ouverture et la fermeture, d'une section transversale pouvant être parcourue du au moins un chemin de recirculation (12),
- le dispositif de commande (15) présentant une douille de commande (16), qui est disposée dans le canal d'admission (10) de façon à pouvoir coulisser axialement entre une position ouverte et une position fermée,
**caractérisé**
- **en ce que** le au moins un chemin de recirculation (12) présente une cavité (17) radiale qui est introduite dans un boîtier (2) contenant le canal d'entrée (10) et l'espace de la roue de compresseur (3),
- **en ce qu'**il est prévu une douille de canal (29) disposée de façon fixe sur le boîtier (2), qui, dans la zone de la douille de commande (16), délimite radialement à l'extérieur le canal d'admission (10) et au moins en partie l'espace de roue de compresseur (3) et recouvre alors axialement la cavité (17) respective et la délimite radialement à l'intérieur.
- **en ce que** la douille de commande (16) est disposée sur le même axe que la douille de commande (29) et est montée radialement à l'extérieur sur la douille de canal (29) de façon à pouvoir coulisser axialement,
- **en ce que** la douille de commande (29) présente au moins un passage (30) radial par lequel le chemin de recirculation (12) respectif communique avec le canal d'admission (10),
- **en ce qu'**un tronçon (18), tourné vers la roue de compresseur (4), de la douille de commande (16) s'étend le long et/ou à l'intérieur de la cavité (17) respective.

2. Compresseur radial selon la revendication 1, **caractérisé en ce que**
la douille de commande (16) présente au moins un passage (19) radial par lequel le au moins un chemin de recirculation (12) communique avec le canal d'admission (10).

3. Compresseur radial selon la revendication 1 ou 2, **caractérisé en ce que**
la douille de commande (16) présente un tronçon d'extrémité (18) côté avant, tourné vers la roue de compresseur (4), qui ferme dans la position de fermeture une extrémité (14), débouchant dans l'espace de la roue de compresseur (3), du au moins un chemin de recirculation (12).

4. Compresseur radial selon l'une quelconque des revendications 1 à 3,
**caractérisé en ce que**
la douille de commande (16) ferme dans sa position de fermeture avec son extrémité (21) côté avant, tournée vers la roue de compresseur (4), une ouverture (14), débouchant dans l'espace de la roue de compresseur (3), du chemin de recirculation (12) respectif, laquelle ouverture est formée par un espace entre des extrémités (31, 22) correspondantes de la cavité (17) respective et de la douille de canal (29).

5. Compresseur radial selon l'une quelconque des revendications 1 à 4,
**caractérisé en ce que**, dans sa position ouverte, la douille de commande (16) est disposée avec son au moins un passage (19) en alignement radial avec au moins un passage (30) de la douille de canal (29).

6. Compresseur radial selon l'une quelconque des revendications 1 à 5,
**caractérisé en ce que** la douille de commande (16) ferme dans sa position de fermeture le au moins un passage (30) de la douille de canal (29).

7. Turbocompresseur, en particulier turbocompresseur à gaz d'échappement, comprenant un compresseur radial (1) selon l'une quelconque des revendications 1 à 6.

8. Procédé pour faire fonctionner un compresseur radial (1) selon l'une quelconque des revendications 1 à 6 ou d'un turbocompresseur (5) selon la revendication 7, en particulier pour un moteur à combustion interne,
- dans lequel une roue de compresseur (4) dans un espace de roue de compresseur (3) transporte du gaz d'un coté d'entrée (7), communiquant avec un canal d'admission (10), à un coté de sortie (8),
- dans lequel au moins un chemin de recirculation (12) contrôlable est prévu, lequel est relié de façon communicante par une extrémité avec le canal d'admission (10) en amont du côté d'entrée (7) et par l'autre extrémité à l'espace de roue de compresseur (3) en aval du côté d'entrée (7) et en amont du côté de sortie (8).
- dans lequel le au moins un chemin de recirculation (12) est ouvert dans une zone de petits flux massiques de gaz,
- dans lequel au moins un chemin de recirculation (12) est fermé dans une zone de grands flux massiques de gaz.

9. Procédé selon la revendication 8,
**caractérisé en ce que**
un chemin de recirculation (12) est ouvert dans une zone de flux massiques maximum de gaz.
